(19) Europäisches Patentamt
European Patent Office
Office européen des brevets

(11) **EP 1 837 729 B1**

(12) **EUROPÄISCHE PATENTSCHRIFT**

(45) Veröffentlichungstag und Bekanntmachung des Hinweises auf die Patenterteilung:
**06.05.2015 Patentblatt 2015/19**

(51) Int Cl.:
***G05D 23/19*** *(2006.01)*

(21) Anmeldenummer: **06024568.5**

(22) Anmeldetag: **28.11.2006**

(54) **Verfahren und Vorrichtung zur bedarfsgeführten Wärmebereitstellung in einer Heizungsanlage**

Method and device for demand-driven heat provision in a heating system

Procédé et dispositif destinés à la mise à disposition de la chaleur selon les besoins dans une installation de chauffage

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.03.2006 DE 102006013098**

(43) Veröffentlichungstag der Anmeldung:
**26.09.2007 Patentblatt 2007/39**

(73) Patentinhaber: **Techem Energy Services GmbH 65760 Eschborn (DE)**

(72) Erfinder: **Kähler, Arne, Dr. 12683 Berlin (DE)**

(74) Vertreter: **Keil & Schaafhausen Patent- und Rechtsanwälte Friedrichstrasse 2-6 60323 Frankfurt am Main (DE)**

(56) Entgegenhaltungen:
**EP-A1- 0 590 250     DE-A1- 3 537 104
DE-A1- 4 009 773**

**Beschreibung**

Die Erfindung betrifft ein Verfahren zur bedarfsgeführten Wärmebereitstellung in einer Heizungsanlage, der eine in Abhängigkeit von einer externen Führungsgröße vorgegebene Wärmeleistung bereitgestellt wird, wobei die bereitgestellte Wärmeleistung zusätzlich von dem Wärmebedarf der Heizungsanlage abhängt, indem bei der Abhängigkeit von der externen Führungsgröße Korrekturwerte berücksichtigt werden. Die Erfindung bezieht sich ferner auf eine entsprechende Vorrichtung, die insbesondere zur Durchführung dieses Verfahrens eingerichtet ist.

Eine bedarfsgeführte Wärmebereitstellung kann insbesondere bei Heizungsanlagen mit einer thermostatischen, elektronischen und/oder manuellen Einzelraumtemperaturregelung zur Anpassung der Vorlauftemperatur und/oder des Massenstroms des zur Heizung verwendeten Wärmeträgers angewendet werden, um eine optimal an den Gesamtwärmebedarf eines Gebäudes angepasste Heizungsanlage zu schaffen. Die Heizwärme wird bei derartigen Heizungsanlagen typischerweise zentral erzeugt oder bereitgestellt und dezentral, insbesondere raumweise, übergeben. Als Wärmeträger wird üblicherweise Wasser eingesetzt. Die Leistungsanpassung der zentralen Heizungsversorgung erfolgt durch eine Veränderung der Vorlauftemperatur und/oder des Massenstroms des Wärmeträgers.

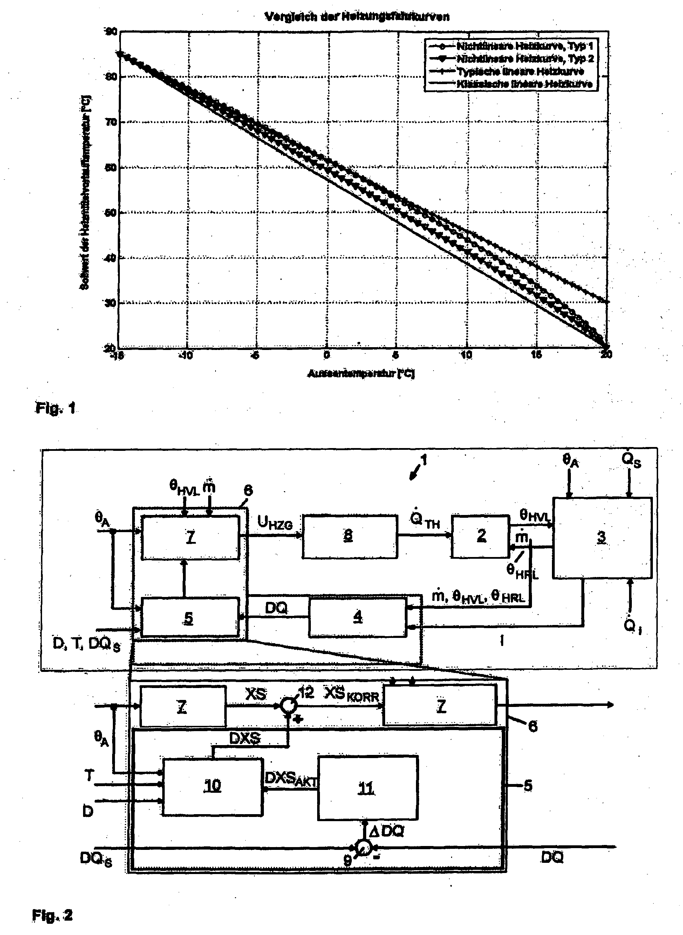

Bei den derzeit betriebenen Heizungsanlagen zur Wärmeversorgung von Gebäuden wird der Sollwert der Vorlauftemperatur des auch als Heizmittel bezeichneten Wärmeträgers überwiegend in Abhängigkeit von der Außentemperatur anhand einer stationären, linearen oder nicht-linearen Heizungsfahrkurve geführt. Beispiele für derartige Heizungsfahrkurven sind in Fig. 1 dargestellt.

Werden neben der Außentemperatur als externe Führungsgröße keine weiteren Führungsgrößen zur Vorgabe der Vorlauftemperatur berücksichtigt, führt diese Heizungssteuerung in der Regel zu einem signifikanten Unterschied zwischen der momentan bereitgestellten Heizleistung und dem tatsächlichen, aktuellen Gebäudewärmebedarf. Die Folge sind typischerweise zu hohe oder zu niedrige, also dem Bedarf nicht angepasste System- bzw. Vorlauftemperaturen, woraus für den praktisch weit verbreiteten Fall überhöhter Systemtemperaturen in Folge zu hoch eingestellter Heizungsfahrkurven sowohl unnötige Wärmeverteilungsverluste als auch Überheizungszustände der Räume resultieren, die einen deutlichen und unnötigen Energiemehrverbrauch nach sich ziehen. Zu niedrige System- bzw. Vorlauftemperaturen führen dagegen zu nicht ausreichenden Beheizungszuständen der Räume, also zu nicht gewünschtem Diskomfort.

Dieser Nachteil kann durch eine bedarfsorientierte Korrektur der Vorlauftemperatur bzw. des Vorlauftemperatursollwerts und/oder des Heizungsmassenstroms bzw. des Heizungsvolumenstroms weitgehend beseitigt werden. Ein Beispiel für ein Verfahren und eine Vorrichtung zur Adaption der Wärmeleistung in Heizungsanlagen ist in der WO 03/052536 A2 ausführlich beschrieben. Dort ist vorgesehen, aus bestimmten Informationen der einzelnen Heizelemente einen Heizkreis- oder Gebäudeversorgungszustand als Regelgröße für eine der eigentlichen Heizungsregelung vorgelagerten Regelung zu gewinnen, welche einen Sollwert und/oder Korrekturwert für die eigentliche Heizungsregelung vorgibt.

Auch der DE 3537104 A1 beschreibt eine adaptive Heizungsanlage.

Dieses und andere bekannte Verfahren zur Korrektur der Vorlauftemperatur verfolgen das Ziel einer zeitnahen Korrektur der Vorlauftemperatur durch eine Regelung, die unmittelbar auf festgestellte Regelabweichungen reagiert. Dies setzt performante Informationsübertragungstechniken voraus und birgt die Gefahr instabiler Regelungen in Folge einer zu großer Rückkopplungsverstärkung.

Aufgabe der vorliegenden Erfindung ist es daher, eine Möglichkeit zur wärmebedarfsorientierten Korrektur der Wärmeleistung in Heizungsanlagen vorzuschlagen, die einfach handhabbar ist und Instabilitäten in Folge zu großer Rückkopplungsverstärkungen in einem Regelsystem vermeidet.

Diese Aufgabe wird mit den Merkmalen der Ansprüche 1 und 12 gelöst. Bei dem eingangs bereits erläuterten Verfahren wird insbesondere vorgeschlagen, dass die Korrekturwerte in Abhängigkeit von der externen Führungsgröße aus einer Korrekturkurve bestimmt werden, welche einen mittleren Wärmebedarf der Heizungsanlage berücksichtigt. Der Kerngedanke der Erfindung liegt also darin, von einer auf eine Regelabweichung unmittelbar reagierenden Regelung zur bedarfsgeführten Adaption der Wärmeleistung durch Einfluss auf die Vorlauftemperatur und/oder den Heizungsmassenstrom der Heizungsanlage auf eine Steuerung überzugehen, welche Korrekturwerte für eine externe Führungsgröße aus einer Korrekturkurve entnimmt. Diese Korrekturkurve enthält gemittelte Korrekturwerte und berücksichtigt daher einen typischen, mittleren Wärmebedarf der konkreten Heizungsanlage. Als externe Führungsgröße kann beispielsweise die Außentemperatur oder eine mit der Außentemperatur korrelierte Messgröße verwendet werden, wobei durch die Korrekturkurve einer abzählbaren Anzahl von Stützstellen in der externen Führungsgröße bestimmte Korrekturwerte zugeordnet werden. Durch den erfindungsgemäßen Übergang von einer schnell reagierenden Regelung auf eine Steuerung mit einer an die Heizungsanlage und das Nutzerverhalten adaptierten Korrekturkurve kann auf die bei den bekannten Verfahren zur Führung der Heizungs-Vorlauftemperatur bzw. der Wärmeleistung notwendigen, aufwendigen und teuren kommunikationsfähigen elektronischen Einzelraumtemperaturregelungen bzw. die entsprechend aufwendige Kommunikationsinfrastruktur verzichtet werden.

Die Vermeidung starker Regelschwankungen in der Heizungsregelung trägt mit dazu bei, dass das Regelsystem insgesamt besser und stabiler wird und sich auch die Regelung der Einzelraumtemperatur verbessert. Aufgrund der an den Bedarf angepassten Wärmebereitstellung wird auch die durch das Rohrsystem vorgegebene und nicht regelbare Wärmeabgabe vermindert. Ferner wird der Massenstrom des Heizmittels besser in der Gesamtanlage verteilt, weil die Ventile der einzelnen Heizelemente aus einem nahezu geschlossenen in einen regelungstechnisch optimalen mittleren Öffnungszustand gebracht werden. Dies bietet eine hohe Regelungsmöglichkeit für die jeweiligen Einzelräume.

In einer einfachen Ausgestaltung des Systems können die Korrekturwerte in Form von Korrekturstellgrößen den Stellgrößen der Heizungsregelung bzw. -steuerung einfach hinzu addiert werden. Alternativ könnten auch aus den Korrekturkurven abgelesene Korrekturwerte an die Heizungssteuerung übermittelt werden, die daraus eine korrigierte Stellgröße insbesondere für den Wärmeerzeuger oder - bei einer Fernwärmeheizung - Wärmeübertrage bestimmt. Ferner ist es möglich, die Korrekturkurven unmittelbar in der Heizungssteuerung bzw. -regelung zu berechnen und/oder zu hinterlegen, so dass die Stellgrößenberechnung direkt in der Heizungssteuerung bzw. -regelung erfolgt.

In einer einfachen Realisierung des erfindungsgemäßen Verfahrens können eine erfindungemäße logische Schaltung zur Adaption der bedarfsgeführten Wärmebereitstellung und/oder eine Wärmeleistungsregelung, insbesondere also eine aus diesen Elementen bestehende Steuerung, in eine Kesselregelung mit integriert sein.

Gemäß eines weiteres Merkmals des erfindungsgemäßen Verfahrens ist vorgesehen, dass die Korrekturkurve eine instationäre, adaptive Korrekturkurve ist, welche nach vorgegebenen Zeitperioden automatisch angepasst wird. Das zugrunde liegende Konzept besteht darin, die Abweichungen von einer optimalen Wärmeleistungsadaption während eines vorgegebenen Zeitraums festzustellen und nach Beendigung dieses Zeitraums auszuwerten, um die Korrekturkurve anzupassen. Dies hat zur Folge, dass die Steuerung während dieser Zeitperiode zwar noch mit der nicht optimal angepassten Korrekturkurve erfolgt, die Korrekturkurve im Anschluss an diese Zeitperiode jedoch angepasst wird, so dass für die zukünftige Bereitstellung der Wärmeleistung eine verbesserte Wärmeleistungsadaption stattfindet. Die Anpassung der Korrekturkurve ist also ein iterativer Prozess und kann insbesondere kontinuierlich angewendet werden, indem eine Anpassung beispielsweise einmal täglich erfolgt. Die vorgegebene Zeitperiode wäre in diesem Fall also ein Tag.

Die Anpassung der Korrekturkurve kann erfindungsgemäß dadurch erfolgen, dass über eine vorgebbare Zeitperiode der aktuelle Wärmebedarf der Heizungsanlage als Regelgröße einer Regelung verwendet wird, die als Regelabweichung die Differenz zwischen dem aktuellen Wärmebedarf und der Wärmeleistung bzw. zwischen dem aktuellen Sollwert und dem Istwert eines Versorgungszustands ermittelt und als Korrektur- bzw. Stellgröße einen aktuellen Korrekturwert ausgibt. Die Anpassung der Korrekturkurve kann dazu insbesondere unter Mittelung der aktuellen Korrekturwerte während der vorgegebenen Zeitperiode erfolgen. Während der vorgegebenen Zeitperiode zur Anpassung der Korrekturkurve werden also die Regelabweichungen zwischen dem aktuellen Wärmebedarf und der aktuellen, tatsächlichen Wärmeleistung (oder regelungstechnisch ausgedrückt: zwischen dem Sollwert und dem Istwert des Gesamtversorgungszustands) ständig erfasst und einer Regelung zugeführt, die als Korrekturgröße einen aktuellen Korrekturwert ausgibt, unter dessen Verwendung eine aktuelle Stellgröße für die Wärmeleistungserzeugung der Heizungsanlage ermittelt werden könnte, um die erzeugte Wärmeleistung an den tatsächlichen Wärmebedarf anzupassen. Im Gegensatz zu einer herkömmlichen Regelung wird dieser aktuelle Korrekturwert jedoch nicht an die Heizungssteuerung weitergegeben, sondern lediglich intern bspw. innerhalb eines Korrekturkurvenadaptionsmoduls gespeichert und über die vorgegebene Zeitperiode gemittelt. Aufgrund dieses Mittelwerts kann dann eine Korrektur der verwendeten Korrekturkurve erfolgen, im einfachsten Fall durch eine Parallelverschiebung der Korrekturkurve.

Gemäß einer bevorzugten Ausgestaltung dieser Anpassung der Korrekturkurve ist jedoch vorgesehen, dass auch eine Mittelung der externen Führungsgröße über die vorgegebene Zeitperiode erfolgt, so dass die Korrekturkurve insbesondere in dem Bereich angepasst werden kann, in dem die externe Führungsgröße während der Erfassung der Regelabweichungen lag.

Dazu kann besonders bevorzugt eine mit der externen Führungsgröße gewichtete Anpassung der Korrekturkurve erfolgen, wobei die Anpassung um den Mittelwert der externen Führungsgröße herum betragsmäßig am größten ist und mit weiterer Entfernung von diesem Mittelwert abfällt. Die Mittelung sowohl der Führungsgröße als auch der aktuellen Korrekturwerte ist dabei nicht auf eine arithmetische Mittelung beschränkt, sondern kann bspw. auch durch eine Filterung dieser Größen oder dgl. erfolgen.

Um zu große Schwankungen der Korrekturkurve zu vermeiden, kann eine Anpassung der Korrekturkurve auf einen vorgegebenen Wertebereich beschränkt werden, selbst wenn ein aktueller und/oder gemittelter Korrekturwert außerhalb dieses Wertebereichs liegt. Durch diese Begrenzung der bspw. täglichen Korrekturwertadaption auf einen parametrierbaren Bereich mit einem minimalen und/oder maximalen Korrekturwert, um den die Korrekturkurve angepasst wird, kann eine besonders hohe Systemstabilität erreicht werden.

Gemäß einer besonders bevorzugten Ausgestaltung des erfindungsgemäßen Verfahrens wird vorgeschlagen, dass mehrere Korrekturkurven für verschiedene Zeitperioden vorgesehen sind. So ist es insbesondere sinnvoll, verschiedene Korrekturkurven für verschiedene Tageszeiten, wie Vormittag, Mittag, Nachmittag, Abend und/oder Nacht, sowie unterschiedliche Tagestypen, insbesondere Werktag und Sonn- bzw. Feiertag, vorzusehen, da der Wärmebedarf abhängig von dem jeweiligen Nutzerverhalten in diesen Zeiträumen auch bei einer gleichen externen Führungsgröße (beispielsweise Außentemperatur) verschieden sein kann.

Besonders einfach lässt sich das vorgeschlagene Verfahren umsetzen, indem die Korrekturkurve durch Vorgabe von Korrekturwerten an fest vorgegeben oder bspw. in Anhängigkeit von der Steigung der Korrekturkurve variabel ermittelten Stützstellen der externen Führungsgröße definiert wird. Sofern die externe Führungsgröße dann zwischen zwei Stützstellen liegt, kann durch geeignete Interpolationsverfahren ein sinnvoller Korrekturwert ermittelt werden. Liegt die Führungsgröße außerhalb des durch die Stützstellen abgedeckten Wertebereichs, kann extrapoliert werden.

In einer für die Heizungssteuerung sinnvollen Anwendung ist die externe Führungsgröße die Außentemperatur oder eine von der Außentemperatur abhängige Messgröße, beispielsweise der Widerstand eines Temperaturfühlers.

Entsprechend kann der Korrekturwert einer Änderung der Vorlauftemperatur und/oder des Massenstroms der Heizungsanlage entsprechen, die unmittelbar als Korrekturwert oder umgerechnet als Stellgröße für die Ansteuerung des Wärmeerzeugers oder -übertragers der Heizung zugeführt wird.

Ferner bezieht sich die Erfindung auf eine insbesondere zur Durchführung des vorbeschriebenen Verfahrens mit allen seinen Merkmalen eingerichtete Vorrichtung zur bedarfsgeführten Wärmebereitstellung in einer Heizungsanlage mit einer logischen Schaltung zur Vorgabe von Korrekturwerten, welche den Wärmebedarf der Heizungsanlage berücksichtigen, wobei die logische Schaltung ein Korrekturmodul mit einem Speicher zur Speicherung einer oder mehrerer Korrekturkurven, einem Eingang zur Eingabe mindestens einer externen Führungsgröße und einem Ausgang zur Ausgabe eines Korrekturwertes aufweist. Um eine hohe Stabilität in der Wärmeleistungsadaption zu erreichen und große Regelungsschwankungen in der Heizungsregelung zu vermeiden, ist erfindungsgemäß vorgesehen, dass ein Korrekturmodul mit einem Eingang zur Eingabe des aktuellen Wärmebedarfs der Heizungsanlage vorgesehen ist, welches zur Bestimmung eines aktuellen Korrekturwerts aus dem aktuellen Wärmebedarf eingerichtet ist, und dass das Korrekturkurvenadaptionsmodul zur Ermittlung des Korrekturwerts aus einer Korrekturkurve in Abhängigkeit von der externen Führungsgröße sowie zur Anpassung der Korrekturkurve eingerichtet ist. Dadurch wird ein unmittelbarer Durchgriff des aktuellen Korrekturwerts auf die Heizungsregelung vermieden, der ggf. zu hohen Regelschwankungen führen kann. Statt dessen wird der aktuelle Korrekturwert verwendet, um die Korrekturkurven zu korrigieren, welche dann den auf die Heizungsregelung wirkenden Korrekturwert vorgeben.

Vorzugsweise werden zur Adaption einer Korrekturkurve die externe Führungsgröße und eine aktuelle Korrekturgröße über eine vorgebbare Zeitperiode gemittelt und die Korrekturkurve entsprechend anpasst. Neben der externen Führungsgröße, welche unmittelbar zur Ermittlung des Korrekturwertes herangezogen wird, können weitere Eingänge für Führungsgrößen vorgesehen sein, welche eine Auswahl verschiedener Korrekturkurven ermöglichen. Derartige weitere Führungsgrößen können bspw. die Tageszeit und der Tagestyp sein, so dass verschiedene Korrekturkurven für verschiedene Tageszeitintervalle (Morgen, Mittag, Abend, Nacht, etc.) und verschiedene Tagestypen (Werktag, Sonn- und Feiertag, etc.) verwendet und entsprechend angepasst werden können.

Das Korrekturmodul kann dabei sämtliche der im Zusammenhang mit dem vorher beschriebenen Verfahren stehenden Merkmale realisieren. Insbesondere kann zur Bestimmung aktueller Korrekturwerte aus dem aktuellen Wärmebedarf der Heizungsanlage eine Regelung vorgesehen sein, deren Regelergebnis jedoch nicht unmittelbar als Stellgröße für den Wärmeerzeuger oder -übertragen herangezogen sondern lediglich für die Anpassung der Korrekturkurve verwendet wird.

Weitere Merkmale, Vorteile und Anwendungsmöglichkeiten der Erfindung ergeben sich auch aus der nachfolgenden Beschreibung eines Ausführungsbeispiels und der Zeichnung. Dabei bilden alle beschriebenen und/oder bildlich dargestellten Merkmale des für sich oder in beliebiger Kombination den Gegenstand der vorliegenden Erfindung, auch unabhängig von ihrer Zusammenfassung in den Ansprüchen oder deren Rückbezügen.

Es zeigen:

Fig. 1    typische Heizungsfahrkurven einer Heizungssteuerung;

Fig. 2    einen Signalflussplan für die bedarfsgeführte Wärmebereitstellung gemäß einer ersten Ausführungsform der vorliegenden Erfindung;

Fig. 3    einen Signalflussplan für die bedarfsgeführte Wärmebereitstellung gemäß einer zweiten Ausführungsform der vorliegenden Erfindung;

Fig. 4    eine erste Korrekturkurve gemäß der vorliegenden Erfindung;

Fig. 5    eine zweite Korrekturkurve gemäß der vorliegenden Erfindung und

Fig. 6    einen Vergleich zweier Korrekturkurven vor und nach einer aktuellen Anpassung.

In Fig. 1 sind typische Heizungsfahrkurven dargestellt, die in Abhängigkeit von der Außentemperatur als externe Führungsgröße den Sollwert der Heizmittelvorlauftemperatur vorgeben, der als eine Eingangsgröße der Wärmeleistungsregelung einem Wärmeerzeuger oder Wärmeübertrager übermittelt wird. Erwartungsgemäß ist der Sollwert der Heizmittelvorlauftemperatur bei niedrigen Außentemperaturen am höchsten und wird mit steigender Außentemperatur kontinuierlich abgesenkt. Dies gilt sowohl für lineare als auch nicht-lineare Heizungsfahrkurven (Heizkurven), für die in Fig. 1 verschiedene Beispiele dargestellt sind.

In dem in Fig. 2 dargestellten Signalflussplan für eine Heizungssteuerung bzw. -regelung 1 ist die verwendete Heizungsfahrkurve in der Wärmeleistungsregelung 7 implementiert, welche unter Verwendung der Außentemperatur $\vartheta_A$ sowie ggf. unter Berücksichtigung eines Massenstroms $\dot{m}$ und/oder einer Vorlauftemperatur $\vartheta_{HVL}$ des Heizmittels die Stellgröße $U_{HZG}$ an einen Wärmeerzeuger bzw. -übertrager 8 vorgibt. Der Wärmeerzeuger bzw. -übertrager 8 versorgt die Heizungsanlage 2 mit einer ausreichenden Heizungswärmeleistung $\dot{Q}_{TH}$, damit in der Heizungsanlage 2 ein geeigneter Massenstrom $\dot{m}$ des Wärmeträgers bzw. Heizmittels mit der gewünschten Vorlauftemperatur $\vartheta_{HVL}$ an die Heizelemente von angeschlossenen Raumtemperaturregelungen 3 abgegeben werden kann. Nach Abgabe der benötigten Wärmemenge gelangt der Wärmeträger mit einer Rücklauftemperatur $\vartheta_{HRL}$ wieder zurück in die Heizungsanlage 2.

Die Raumtemperaturregelungen 3 stellen durch Regelung beispielsweise der Hubpositionen von Stellventilen der Heizelemente die in den jeweiligen Räumen gewünschte Temperatur ein. Diese Einzelraumregelungen 3 berücksichtigen dabei beispielsweise die Außentemperatur $\vartheta_A$ und die als Wärmegewinne zu bezeichnenden solare Wärmeleistung $\dot{Q}_S$ und interne Wärmeleistung $\dot{Q}_i$. Für die vorliegende Erfindung ist jedoch nicht ausschlaggebend, aufgrund welcher Eingangsgrößen die Raumtemperaturregelungen 3 die Temperatur in den zu beheizenden Räumen regeln. Daher ist die vorliegende Erfindung für jede Art von angeschlossenen Raumtemperaturregelungen 3 geeignet, die alternativ oder zusätzlich auch von anderen Eingangsgrößen abhängen können.

Jede Raumtemperaturregelung 3 übermittelt Informationen I zur Bestimmung des Wärmebedarfs an ein Modul zur Wärmebedarfs- oder Wärmeleistungsanalyse 4 weiter, welches daraus einen momentanen oder gemittelten Wärmebedarf DQ ermittelt. Hierzu können die Informationen 1, wie in der WO 03/052536 A2 beschrieben, die Hubpositionen bzw. Ventilstellungen der einzelnen Heizelemente der Raumtemperaturregelungen sein, aus denen für den Wärmebedarf ein Heizkreis- oder Gebäudeversorgungszustand ermittelt wird. Alternativ kann, wie in der DE 10 2004 049 112 A1 beschrieben, ein Versorgungszustand auch aus mindestens zwei Heizflächen-Temperaturwerten und/oder einem Volumenstromwert $\dot{m}$ ermittelt werden. Die Erfindung ist jedoch nicht auf die vorgenannten Verfahren zur Ermittlung eines Wärmebedarfs beschränkt, sondern grundsätzlich in sämtlichen Heizungssystemen einsetzbar, bei denen aus in von der Heizungsanlage 2 zu beheizenden Räumen ermittelten Messwerten ein Wärmebedarf bestimmt werden kann. So können bspw. auch die Heizkreisvorlauf- und/oder Heizkreisrücklauftemperatur $\vartheta_{HVL}$ oder $\vartheta_{HRL}$ als Eingangsgrößen des Modul zur Wärmebedarfs- oder Wärmeleistungsanalyse 4 dienen.

Dieser für das Gebäude oder einen Heizkreis in einer bestimmten Situation ermittelte Wärmebedarf DQ wird einem Modul mit einer Schaltung 5 zur Vorgabe von Korrekturwerten zugeführt, die gemeinsam mit der Wärmeleistungsregelung 7 eine Steuerung 6 zur Vorgabe der Stellgröße $U_{HZG}$ bildet. Dabei werden von der Steuerung 6 weitere Eingabegrößen wie insbesondere der Wärmebedarf-Sollwert $DQ_S$, die aktuelle Vorlauftemperatur $\vartheta_{HVL}$ und/oder der aktuelle Massenstrom $\dot{m}$ berücksichtigt.

Das Zusammenwirken der den Kern der Erfindung ausmachenden Schaltung 5 zur Vorgabe von Korrekturwerten mit der Wärmeleistungsregelung 7 im Rahmen der Steuerung 6 wird in der Vergrößerung von Fig. 2 verdeutlicht, die nachfolgend detailliert beschrieben wird.

Aus dem von dem Modul 4 zur Wärmebedarfsanalyse ermittelten momentanen Wärmebedarf DQ und einem vorgegebenen Wärmebedarf-Sollwert $DQ_S$ wird in einem Differenzmodul 9 eine Regelabweichung des Wärmebedarfs $\Delta_{DQ}$ ermittelt, welche nachfolgend vereinfacht auch als Wärmebedarf bezeichnet wird. Diese Regelabweichung $\Delta_{DQ}$ wird einem Korrekturmodul 11 zugeführt, welches daraus einen aktuellen Korrekturwert $DXS_{AKT}$ ermittelt. Dazu weist das Korrekturmodul 11 Regelungs- und Filterfunktionen auf, die geeignet parametriert sind. Insbesondere kann das Korrekturmodul also in Form einer herkömmlichen Regelung ausgebildet sein, die unter Verwendung gängiger Regelalgorithmen, beispielsweise aus der Regelungstechnik bekannte Filter- und Lernverfahren wie PT-1-Filter, Splines, oder auch künstlicher Intelligenz in Form neuronaler Netze, aus der aktuellen Regelabweichung $\Delta_{DQ}$ des aktuellen Wärmebedarfs einen aktuellen Korrekturwert $DXS_{AKT}$ ermittelt.

Dieser aktuelle Korrekturwert $DXS_{AKT}$ wird allerdings nicht der Heizungsregelung 7 zugeführt und daher nicht unmittelbar zur Regelung bzw. Steuerung der Heizungsanlage 2 verwendet. Der Eingriff in die Heizungsregelung 7 erfolgt durch das Korrekturkurvenadaptionsmodul 10, welches primär einen Korrekturwert DXS aus einer Korrekturkurve in Abhängigkeit von der als externe Führungsgröße dienenden Außentemperatur $\vartheta_A$ ermittelt. Dieser Korrekturwert wird als Korrektursollgröße DXS ausgegeben und einem Addierer 12 zugeführt, der die Korrektursollgröße DXS zu einer aus einer stationären Heizkurve gemäß Fig. 1 durch die Wärmeleistungsregelung 7 ermittelten Sollgröße XS addiert, so dass die Wärmeleistungsregelung 7 insgesamt die Sollgröße $XS_{KORR}$ = XS + DXS verwendet, um unter Anwendung eines geeigneten Regelalgorithmus die Stellgröße $U_{HZG}$ an den Wärmeerzeuger bzw. -übertrager 8 auszugeben.

Der Korrekturwert DXS des Korrekturkurvenadaptionsmoduls 10 ist also unabhängig von der aktuellen Regelabweichung $\Delta_{DQ}$ des Wärmebedarfs.

Um eine in dem Korrekturkurvenadaptionsmodul 10 gespeicherte (und für die Bestimmung des Korrekturwertes DXS herangezogene) Korrekturkurve erfindungsgemäß anzupassen, erfasst das Korrekturkurvenadaptionsmodul 10 sowohl den durch das Korrekturmodul 11 ausgegebenen aktuellen Korrekturwert $DXS_{AKT}$ als auch die jeweils aktuelle Außentemperatur $\vartheta_{A,AKT}$ und mittelt diese über einen vorgegebenen Zeitraum. Auf Basis der für diesen Zeitraum gemittelten Außentemperatur $\vartheta_{A,AKT}$ als Führungsgröße und eines mittleren Korrekturwert $DXS_{AKT}$ wird die Korrekturkurve dann korrigiert wird. Dies kann auch in dem Korrekturkurvenadaptionsmodul 10 unter Verwendung gängiger Regelalgorithmen, aus der Regelungstechnik bekannter Filter- und Lernverfahren wie PT-1-Filter, Splines, etc. oder auch künstlicher Intelligenz in Form neuronaler Netze erfolgen.

Diese korrigierte Korrekturkurve wird im Folgenden dann zur Ausgabe der Korrekturwerte DXS verwendet, welche gemeinsam mit der Sollgröße XS die korrigierte Sollgröße $XS_{KORR}$ bildet, aus der die Stellgröße $U_{HZG}$ für den Wärmeerzeuger 8 berechnet wird.

Die Besonderheit der Schaltung 5 zur Vorgabe von Korrekturwerten DXS liegt also darin, dass die Korrekturwerte DXS aus einer gespeicherten Korrekturkurve in Abhängigkeit von der als Führungsgröße dienenden Außentemperatur $\vartheta_A$ bestimmt werden. Hierbei handelt es sich streng genommen um eine Steuerung, da in dem System auftretende Regelabweichungen $\Delta_{DQ}$ nicht direkt berücksichtigt werden. Diese finden lediglich bei der Anpassung der Korrekturkurve in dem Korrekturkurvenadaptionsmodul 10 Anwendung und können bei der zukünftigen Ansteuerung der Heizungsanlage 2 verwendet werden.

Dabei sind in dem Korrekturkurvenadaptionsmodul 10 mehrere Korrekturkurven in Abhängigkeit von der Tageszeit T und dem Tagestyp D gespeichert, die jeweils gesondert korrigiert werden. Dazu kann der vorbestimmte Zeitraum, nach dem eine Adaption der Korrekturkurve vorgenommen wird, mit den vorgesehen Tageszeitintervallen T der jeweiligen Tagestypen D zusammenfallen.

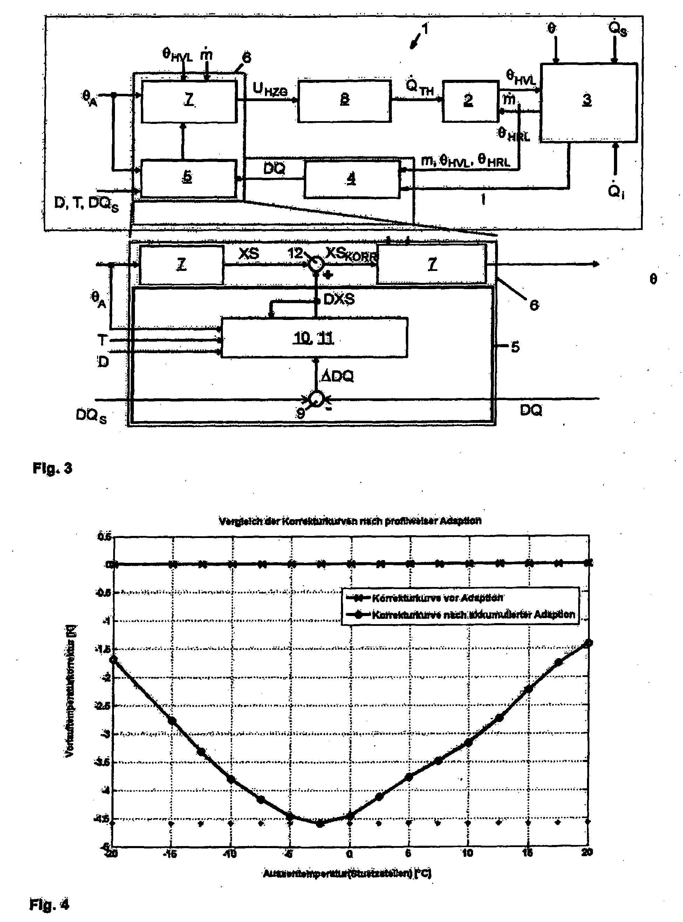

Eine Variante der Schaltung 5 zur Vorgabe von Korrekturwerten DXS ist in Fig. 3 dargestellt. Die Schaltung 5 gemäß Fig. 3 unterscheidet sich von der zuvor beschriebenen Schaltung 5 in Fig. 2 dadurch, dass das Korrekturmodul 11 und das Korrekturkurvenadaptionsmodul 10 zu einem gemeinsamen Modul zusammengefasst sind. Dies entspricht einer in der Praxis häufig vorkommenden Realisierung, da das Korrekturmodul 11 und das Korrekturkurvenadaptionsmodul 10 in Form eines Mikrokontrollers ausgebildet sind, der sowohl die Aufgaben des Korrekturmoduls 11 als auch des Korrekturkurvenadaptionsmoduls 10 wahrnimmt. Im Übrigen entspricht die Heizungssteuerung 1 gemäß Fig. 3 der in Fig. 2 beschriebenen Heizungssteuerung 1, so dass dieselben Bezugzeichen verwendet wurden und auf eine ausführliche Beschreibung verzichtet wird.

Nachfolgend wird das in der Schaltung 5 zur Vorgabe von Korrekturwerten DXS vorgesehene Verfahren noch einmal im Detail beschrieben.

Eingangswerte der Schaltung 5 zur Vorgabe von Korrekturwerten DXS, in der das erfindungsgemäße Verfahren implementiert ist und die insbesondere Bestandteil der erfindungsgemäßen Vorrichtung ist, sind zeitlich aktuelle bzw. zeitlich gemittelte Kenngrößen, aus denen sich der zeitlich aktuelle bzw. der zeitlich gemittelte Heizwärmebedarf des Gebäudes oder Heizkreises ermitteln lässt. Diese Eingangswerte können die Außentemperatur $\vartheta_A$ oder eine korrelierte Messgröße (wie etwa Widerstandswerte von Sensoren), die Tageszeit T, der Tagestyp D (bspw. Werktag, Feiertag), Profilzeiträume (bspw. Nacht, Vormittag, Nachmittag, Abend), Versorgungszustände von Heizflächen und deren Sollwerte, Versorgungszustände von Gebäuden, Gebäudeteilen oder Heizkreisen und deren Sollwerte, Heizkörperleistungen $\dot{Q}_{HK}$ und deren Sollwerte, Heizkörper-Nennleistungen im Normalarbeitspunkt $\dot{Q}_{HK, Nenn}$, Heizkörper-Leistungen bei der aktuellen Vorlauftemperatur und dem Nennmassenstrom $\dot{Q}_{HK, dm\_Nenn}$, Heizkörper-Leistungen bei aktueller Vorlauftemperatur und bei vollständig geöffnetem Heizkörperventil $\dot{Q}_{HK, Hub\_100n}$ und/oder Leistungsverhältnisse von Heizkörpern und deren Sollwerte

$$\left( \frac{\dot{Q}_{HK}}{\dot{Q}_{HK,Nenn}} , \frac{\dot{Q}_{HK}}{\dot{Q}_{HK,dm\_Nenn}} , \frac{\dot{Q}_{HK}}{\dot{Q}_{HK,HUB\_100}} \right).$$

Ziel des Verfahrens ist es, Korrekturwerte DXS zur Korrektur der Vorlauftemperatur und/oder des Massenstroms einer zentralen Heizungsanlage 2 auszugeben. Diese werden einer oder mehreren, in der Schaltung 5 zur Vorgabe der Korrekturwerte gespeicherten Korrekturkurve(n) in Abhängigkeit der externen Führungsgröße (Außentemperatur oder deren Äquivalent) entnommen. Dabei sind abhängig von dem aktuellen Tagestyp (Werktag, Feiertag) und dem aktuellen Tageszeitabschnitt (Profil) verschiedene Korrekturkurven gespeichert, indem an bestimmten Stützstellen der externen Führungsgröße (Außentemperatur) Korrekturwerte gespeichert sind. Aus diesen wird inter- oder extrapolierend oder auch approximierend eine Korrekturstellgröße DXS berechnet und an den Heizungsregler übergeben bzw. von ihm bestimmt. Die resultierende, korrigierte Stellgröße $U_{HZG}$ wird aus dem Basissollwert XS der Wärmeleistungsregelung 7 und dem Korrekturwertes DXS sowie ggf. unter Berücksichtigung der aktuellen Istwerte der Vorlauftemperatur und/oder des Massenstroms in einem festgelegten Regelalgorithmus gebildet.

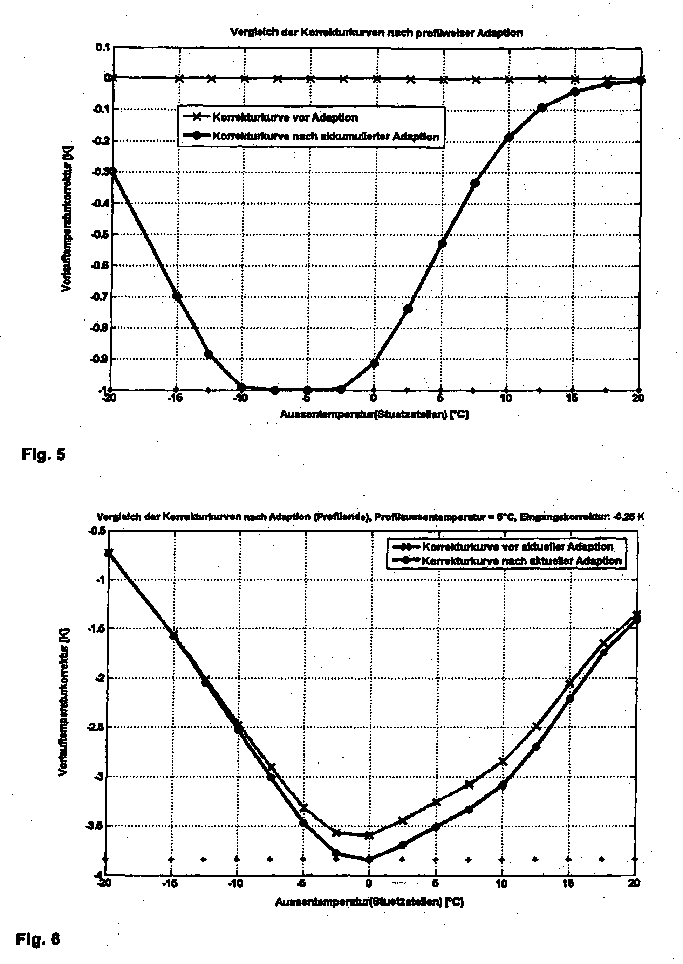

Beispiele für verwendete Korrekturkurven sind in den Fig. 4 und 5 dargestellt, in denen Vorlauftemperaturkorrekturwerte in beliebigen Einheiten an verschiedenen Stützstellen der Außentemperatur eingetragen sind. Zum Vergleich sind jeweils eine Korrekturkurve vor Bestimmung der Korrekturwerte (alle Korrekturwerte sind auf Null gesetzt) und eine Korrekturkurve mit abhängig von der Außentemperatur festgelegten Vorlauftemperaturkorrekturwerten dargestellt.

Die Korrekturkurven gemäß Fig. 4 und Fig. 5 unterscheiden sich im Profil (Tageszeit), wobei die Kurve gemäß Fig. 4 im Vergleich zu der Kurve gemäß Fig. 5 insgesamt eine stärkere Absenkung vorsieht. Die Korrekturkurve gemäß Fig. 4 eignet sich daher für ein Nachtprofil, da nachts in der Regel eine niedrigere Raumtemperatur und damit eine geringere Heizleistung benötigt wird. Die Korrekturkurve gemäß Fig. 5 ist dagegen für ein Tagprofil geeignet. Grundsätzlich können die Korrekturkurven profilweise vorgegeben und in der Schaltung hinterlegt werden.

Es ist gemäß der beschriebenen Ausführungsform jedoch vorgesehen, dass die Korrekturkurven in der Schaltung 5 selbsttätig ermittelt werden, wobei sie sich entsprechend dem Nutzerverhalten iterativ anpassen. Dazu ist vorgesehen, dass aktuelle oder zeitlich gemittelte Korrekturwerte zur Korrektur von Vorlauftemperatur und/oder Massenstrom der Heizungsanlage auf Grundlage der ermittelten Abweichung zwischen Soll- und Ist-Wert der den Wärmebedarf anzeigenden Kenngröße (Regelabweichung $\Delta_{DQ}$) errechnet werden. Die Kenngrößen können, wie bereits erläutert, Versorgungszustände von Heizflächen, Versorgungszustände von Gebäuden, Gebäudeteilen oder Heizkreisen und deren Sollwerte, Heizkörperleistungen $\dot{Q}_{HK}$ und deren Sollwerte, Heizkörper-Nennleistungen im Normalarbeitspunkt $\dot{Q}_{HK,\,Nenn}$, Heizkörper-Leistungen bei der aktuellen Vorlauftemperatur und dem Nennmassenstrom $\dot{Q}_{HK,\,dm\_Nenn}$, Heizkörper-Leistungen bei aktueller Vorlauftemperatur und bei vollständig geöffnetem Heizkörperventil $\dot{Q}_{HK,\,Hub\_100n}$ und/oder Leistungsverhältnisse von Heizkörpern und deren Sollwerte

$$\left( \dot{Q}_{HK} \middle/ \dot{Q}_{HK,Nenn} \,,\; \dot{Q}_{HK} \middle/ \dot{Q}_{HK,dm\_Nenn} \,,\; \dot{Q}_{HK} \middle/ \dot{Q}_{HK,HUB\_100} \right) \text{ sein.}$$

sein.

Die aktuellen Korrekturwerte $DXS_{AKT}$ zur Korrektur der Vorlauftemperatur und/oder des Massenstroms der zentralen Heizungsanlage 2 werden nach an sich bekannten Verfahren der Regelungstechnik so bestimmt, dass die Regelabweichungen der Kenngröße minimiert werden bzw. gegen Null führen. Vorteilhaft im Sinne einer hohen Systemstabilität ist es dabei, wenn die Anpassung der Korrekturkurve innerhalb einer vorgegebenen Zeitperiode, beispielsweise einer täglichen Korrekturwertadaption, auf einen maximalen parametrierbaren Bereich begrenzt wird, so dass eine Adaption insbesondere nur um einen maximalen Wert geändert werden kann.

Die Regelabweichungen der Kenngrößen und der daraus resultierenden aktuellen Korrekturgrößen zur Korrektur von Vorlauftemperatur und/oder Massenstrom der zentralen Heizungsanlage 2 werden während der auch als Lernphasen bezeichneten, vorgegebenen Zeitperioden gemittelt bzw. gefiltert. Ebenso werden während dieser Lernphasen die Außentemperatur $\vartheta_A$ oder eine mit der Außentemperatur korrelierte Größe gemittelt bzw. gefiltert. Nach Abschluss jeder Lernphase bspw. der Zeitdauer eines Tagesprofilzeitraums, wird ein Satz von Korrekturstützwerten $DXS_{Node}(i)$ in festen oder variablen Stützstellen (i) der Außentemperatur $\vartheta_A$ oder einer mit der Außentemperatur korrelierten Größe (zum Beispiel Widerstandswerte eines Außentemperatursensors) mit Hilfe der gemittelten Werte (Korrekturwerte und Außentemperatur) trainiert bzw. angepasst. Im Ergebnis entstehen zeitvariante, adaptive Korrekturkurven $DXS_{Node}(i)$, die sich selbsttätig insbesondere auch an ein sich änderndes Nutzerverhalten anpassen.

Das Lernen der Korrekturwerte in den Stützstellen erfolgt iterativ unter Berücksichtigung von Vergangenheits- und Momentanwerten. Hierfür können bekannte Filter- und Lernverfahren der Regelungstechnik oder auch der künstlichen Intelligenz verwendet werden:

$$DXS_{Node}(i)_{new} = f\left( DXS_{Node}(i)_{old}, DXS_{AKT}, \vartheta_{A,AKT}, Filtertyp, Parameter \right) \text{ mit:}$$

$DXS_{Node}(i)$     Korrekturwert in der Stützstelle i;
$DXS_{AKT}$     gemittelte bzw. aktuelle Korrekturgröße der letzten Lernphase;
$\vartheta_{A,\,AKT}$     Außentemperatur (oder Äquivalent) der letzten Lernphase.

Dieses Vorgehen ist den nebeneinander dargestellten Korrekturkurven in Fig. 6 zu entnehmen.

Vorteilhaft ist auch eine gewichtete Verteilung des Korrekturwertes $DXS_{AKT}$ aus der aktuellen Lernphase auf die Korrekturstützwerte $DXS_{Node}(i)$ auf Basis der Außentemperatur oder des Außentemperaturäquivalents $\vartheta_{A,\,AKT}$ entsprechend der folgenden Formel:

$$DXS_{Node}(i)_{new} = DXS_{Node}(i)_{old} + g(i) \cdot DXS_{AKT},$$

wobei

$$g(i) = \exp\left(-\left[d(i)/K\right]^2\right)$$

$$d(i) = \vartheta_{A\_Node}(i) - \vartheta_{A,AKT}$$

$\vartheta_{A\_Node}(i)$     Außentemperatur oder Äquivalent in der Stützstelle i und

K        Verteilungskonstante.

Idealerweise sind die Lernphase bzw. die vorgegebenen Zeitperioden Tageszeitabschnitten zugeordnet, denen ein signifikant unterschiedliches Nutzerverhalten entspricht. Beispiele hierfür sind die Tagesabschnitte Nacht, Vormittag, Nachmittag und Abend. Die Korrekturkurven können als Wertepaare (Korrekturwert DXS$_{Node}$(i), Außentemperatur $\vartheta_A$(i)) im Speicher der Schaltung 5 hinterlegt sein. Die Korrekturkurven sind dem Tagestyp (Werktag, Feiertag) und den Tageszeitabschnitten (Nacht, Vormittag, Nachmittag, Abend) zugeordnet, während derer sie trainiert wurden. Sie widerspiegeln das tagestyp- und tageszeitabhängige sowie außentemperaturabhängige Nutzerverhalten und den Heizungsanlagenbetrieb in einem Gebäude.

Der Mittelwert der gelernten Korrekturkurven über alle Stützstellen zeigt die mittlere Absenkung des Massenstroms oder der Vorlauftemperatur gegenüber den Basis-Sollwerten, die sich aus den Grundeinstellungen der Wärmeleistungsregelung 7 ergeben. Die aktuellen Korrekturwerte zeigen die momentane Absenkung des Massenstroms oder der Vorlauftemperatur gegenüber den Basis-Sollwerten. Sowohl die mittleren als auch die aktuellen Korrekturwerte können zur Erfolgsbewertung des Verfahrens gespeichert und genutzt werden. So entspricht bspw. eine Absenkung der Vorlauftemperatur um 1 KelVin in Deutschland ca. 2% Einsparung an Heizenergie.

Die adaptiven Korrekturkurven sind eine Eigenschaft des Systems 'Gebäude/Nutzer' und können auch nach einer Abschaltung der Korrekturlogik bzw. Schaltung 5, die diese Korrekturkurven anpasst und trainiert, zur Schätzung eines optimalen Sollwerts für die Vorlauftemperatur und/oder den Massenstrom verwendet werden.

Indem die vorliegende Erfindung Korrekturkurven in kleinen Schritten tagweise und profilbasiert erlernt (trainiert), werden Instabilitäten im System für die bedarfsgeführte Heizenergiebereitstellung vermieden. Zudem werden geringe Anforderungen an die Datenübertragungsperformance von Kommunikationsinfrastrukturen innerhalb des Gebäudes zur Übertragung der Kennwerte und Stellgrößen in Folge tagweiser und profilbasierter Lernphasen gestellt, da bei Ausfall der Kommunikation lediglich ein Trainingsschritt entfällt.

Das erfindungsgemäß vorgeschlagene System kann flexibel in eine Vielzahl bestehender Heizungsanlagen integriert werden, da das System aufgrund der selbsttätigen, iterativen Adaption ohne die Notwendigkeit von Vorgaben an die verschiedensten Heizungssysteme angepasst werden kann.

Die erlernten Korrekturkurven veranschaulichen dem technischen Personal der Gebäude- und Haustechnik die Abweichung der eingestellten Basis-Sollwerte vom energetischen Optimum für die Vorlauftemperatur und/oder für den Heizungsmassenstrom. Aus den erlernten Korrekturkurven kann die erzielte, aktuelle und mittlere Energieeinsparung gegenüber den nicht korrigierten Basis-Sollwerten für den Heizungsmassenstrom und/oder die Vorlauftemperatur errechnet werden.

**Bezugszeichenliste**

| | |
|---|---|
| 1 | Heizungssteuerung bzw. -regelung |
| 2 | Heizungsanlage |
| 3 | Raumtemperaturregelung |
| 4 | Modul zur Wärmebedarfs- oder Wärmeleistungsanalyse |
| 5 | Schaltung zur Vorgabe von Korrekturwerten |
| 6 | Steuerung |
| 7 | Wärmeleistungsregelung |
| 8 | Wärmeerzeuger oder Wärmeübertrager |
| 9 | Differenzmodul |
| 10 | Korrekturkurvenadaptionsmodul |
| 11 | Korrekturmodul |

| 12 | Additionsmodul |
|---|---|
| D | Tagestyp |
| DQ | Wärmebedarf |
| $DQ_S$ | Wärmebedarf-Sollwert |
| DXS | Korrekturwert, Korrekturstollgröße |
| $\Delta_{DQ}$ | Regelabweichung des Wärmebedarfs |
| I | Informationen zur Bestimmung des Wärmebedarfs |
| $\dot{m}$ | Massenstrom |
| $\dot{Q}_{TH}$ | Heizungswärmeleistung |
| T | Tageszeit |
| $\vartheta_A$ | Außentemperatur |
| $\vartheta_{HVL}$ | Vorlauftemperatur |
| $\vartheta_{HRL}$ | Rücklauftemperatur |
| $U_{HZG}$ | Stellgröße |
| XS | Sollgröße |

**Patentansprüche**

1. Verfahren zur bedarfsgeführten Wärmebereitstellung in einer Heizungsanlage (2), der in Abhängigkeit von einer externen Führungsgröße ($\vartheta_A$) eine vorgegebene Wärmeleistung ($Q_{TH}$) bereitgestellt wird, wobei die bereitgestellte Wärmeleistung ($Q_{TH}$) zusätzlich von dem Wärmebedarf (DQ) der Heizungsanlage (2) abhängt, indem bei der Abhängigkeit von der externen Führungsgröße ($\vartheta_A$) Korrekturwerte (DXS) berücksichtigt werden, die in Abhängigkeit von der externen Führungsgröße ($\vartheta_A$) aus einer einen mittleren Wärmebedarf der Heizungsanlage (2) berücksichtigenden Korrekturkurve bestimmt werden, welche eine instationäre, adaptive Korrekturkurve ist, die nach vorgegebenen Zeitperioden angepasst wird, **dadurch gekennzeichnet, dass** die Anpassung der Korrekturkurve dadurch erfolgt, dass über eine vorgegebene Zeitperiode der aktuelle Wärmebedarf (DQ) der Heizungsanlage als Regelgröße ($\Delta_{DQ}$) einer Regelung verwendet wird, die als Korrekturgröße einen aktuellen Korrekturwert ($DXS_{AKT}$) ausgibt, wobei die Anpassung der Korrekturkurve unter Mittelung der aktuellen Korrekturwerte ($DXS_{AKT}$) während der vorgegebenen Zeitperiode erfolgt.

2. Verfahren nach Anspruch 1, **dadurch gekennzeichnet, dass** zur Anpassung der Korrekturkurve eine Mittelung der externen Führungsgröße ($\vartheta_A$) erfolgt.

3. Verfahren nach einem der Ansprüche 1 oder 2, **dadurch gekennzeichnet, dass** eine mit der externen Führungsgröße ($\vartheta_A$) gewichtete Anpassung der Korrekturkurve erfolgt.

4. Verfahren nach einem der vorhergehenden Ansprüche, **dadurch gekennzeichnet, dass** die Anpassung der Korrekturkurve auf einen vorgegebenen Wertebereich beschränkt wird.

5. Verfahren nach einem der vorhergehenden Ansprüche, **dadurch gekennzeichnet, dass** mehrere Korrekturkurven für verschiedene Zeitperiode vorgesehen sind.

6. Verfahren nach einem der vorhergehenden Ansprüche, **dadurch gekennzeichnet, dass** die Korrekturkurve durch Vorgabe von Korrekturwerten ($DXS_{No-de}(i)$) an Stützstellen (i) für Werte der externen Führungsgröße ($\vartheta_A(i)$) vorgegeben ist.

7. Verfahren nach Anspruch 6, **dadurch gekennzeichnet, dass** für nicht an den Stützstellen (i) liegende Werte der externen Führungsgröße ($\vartheta_A(i)$) eine Interpolation oder Extrapolation der Korrekturwerte durchgeführt wird.

8. Verfahren nach der vorhergehenden Ansprüche, **dadurch gekennzeichnet, dass** die externe Führungsgröße die Außentemperatur ($\vartheta_A$) oder eine von der Außentemperatur abhängige Messgröße ist.

9. Verfahren nach einem der vorhergehenden Ansprüche, **dadurch gekennzeichnet, dass** der Korrekturwert (DXS) eine Änderung der Vorlauftemperatur ($\vartheta_{HVL}$) und/oder des Massenstroms ($\dot{m}$) der Heizungsanlage ist.

10. Vorrichtung zur bedarfsgeführten Wärmebereitstellung in einer Heizungsanlage (2) mit einer logischen Schaltung (5) zur Vorgabe von Korrekturwerten (DXS), welche den Wärmebedarf (DQ) der Heizungsanlage (2) berücksichtigen, wobei die logische Schaltung (5) ein Korrekturkurvenadaptionsmodul (10) mit einem Speicher zur Speicherung einer oder mehrerer Korrekturkurve(n), einem Eingang zur Eingabe mindestens einer externen Führungsgröße ($\vartheta_A$) und einem Ausgang zur Ausgabe eines Korrekturwertes (DXS) aufweist, wobei ein Korrekturmodul (11) mit einem Eingang zur Eingabe eines aktuellen Wärmebedarfs ($\Delta_{DQ}$) der Heizungsanlage (2) vorgesehen ist, welches zur Bestimmung eines aktuellen Korrekturwerts ($DXS_{AKT}$) aus dem aktuellen Wärmebedarfs ($\Delta_{DQ}$) eingerichtet ist, und dass das Korrekturkurvenadaptionsmodul (10) zur Ermittlung des Korrekturwerts (DXS) aus einer Korrekturkurve in Abhängigkeit von der externen Führungsgröße ($\vartheta_A$) sowie zur Anpassung der Korrekturkurve eingerichtet ist, **dadurch gekennzeichnet, dass** das Korrekturmodul (11) eine Regelung zur Bestimmung der aktuellen Korrekturwerte ($DXS_{AKT}$) aus dem aktuellen Wärmebedarf ($\Delta_{DQ}$) der Heizungsanlage (2) aufweist und die Vorrichtung zur Durchführung des Verfahrens nach einem der Ansprüche 1 bis 9 eingerichtet ist.

11. Vorrichtung nach Anspruch 10, **dadurch gekennzeichnet, dass** das Korrekturkurvenadaptionsmodul (10) zur Mittelung der Führungsgröße ($\vartheta_A$) und des aktuellen Korrekturwerts ($DXS_{AKT}$) über eine vorgegebene Zeitperiode eingerichtet ist.

12. Vorrichtung nach einem der Ansprüche 10 oder 11, **dadurch gekennzeichnet, dass** die logische Schaltung (5) und/oder Wärmeleistungsregelung (7) in eine Kesselregelung mit integriert sind.

## Claims

1. Method for demand-driven heat provision in a heating system (2), to which a specified thermal power ($\dot{Q}_{TH}$) is provided in accordance with an external reference variable ($\vartheta_A$) wherein the thermal power ($\dot{Q}_{TH}$) provided additionally depends on the heat requirement (DQ) of the heating system (2), by the dependence on the external reference variable ($\vartheta_A$) being such as to take into account correction values (DXS) that are determined from a correction curve in accordance with the external reference variable ($\vartheta_A$), which is a non-stationary, adaptive correction curve that is adapted after specified time periods,
   **characterized in that**
   the correction curve is adapted by the fact that over a pre-specified time period, the current heat requirement (DQ) of the heating system (2) is used as a control variable ($\Delta_{DQ}$) of a control system, and the control system outputs a current correction value ($DXS_{AKT}$) as a correction factor, wherein the correction curve is adapted by averaging the current correction values ($DXS_{AKT}$) during the specified time period.

2. The method according to Claim 1,
   **characterized in that**
   an averaging of the external reference variable ($\vartheta_A$) is carried out in order to adapt the correction curve.

3. The method according to any one of Claims 1 or 2,
   **characterized in that**
   the adaptation of the correction curve is weighted with the external reference variable ($\vartheta_A$).

4. The method according to any one of the preceding claims,
   **characterized in that**
   the adaptation of the correction curve is restricted to a specified range of values.

5. The method according to any one of the preceding claims,
   **characterized in that**
   a plurality of correction curves are provided for different time periods.

6. The method according to any one of the preceding claims,
   **characterized in that**
   the correction curve is specified by the setting of correction values ($DXS_{Node}(i)$) at reference points (i) for values of the external reference variable ($\vartheta_A(i)$).

7. The method according to Claim 6,
   **characterized in that**
   for values of the external reference variable ($\vartheta_A(i)$) which do not lie at the reference points (i), an interpolation or extrapolation of the correction values is performed.

**8.** The method according to the preceding claims,
**characterized in that**
the external reference variable is either the external temperature ($\vartheta_A$) or a variable that is dependent on the external temperature.

**9.** The method according to any one of the preceding claims,
**characterized in that**
the correction value (DXS) is a change in the supply temperature ($\vartheta_{HVL}$) and/or in the mass flow (m) of the heating system.

**10.** Device for demand-driven heat provision in a heating system (2), with a logic circuit (5) for specifying correction values (DXS) which take into account the heat requirement (DQ) of the heating system (2), wherein the logic circuit (5) comprises a correction curve adaptation module (10) with a memory for storing one or a plurality of correction curve (s), an input for entering at least one external reference variable ($\vartheta_A$) and an output for outputting a correction value (DXS), wherein a correction module (11) with an input for entering a current heat requirement ($\Delta_{DQ}$) of the heating system (2) is provided, which is designed to determine a current correction value ($DXS_{AKT}$) from the current heat requirement ($\Delta_{DQ}$), and that the correction curve adaptation module (10) is designed to determine the correction value (DXS) from a correction curve in accordance with the external reference variable ($\vartheta_A$) and to adapt the correction curve,
**characterized in that**
the correction module (11) comprises a control system for determining the current correction values ($DXS_{AKT}$) from the current heat requirement ($\Delta_{DQ}$) of the heating system (2), and the device for carrying out the method is designed according to any one of Claims 1 to 9.

**11.** The device according to Claim 10,
**characterised in that**
the correction curve adaptation module (10) is designed for averaging the reference variable ($\vartheta_A$) and the current correction value ($DXS_{AKT}$) over a specified time period.

**12.** The device according to any one of Claims 10 or 11,
**characterized in that**
the logic circuit (5) and/or the heating power control system (7) are integrated into a boiler control system.

**Revendications**

**1.** Procédé pour la mise à disposition de chaleur en fonction des besoins dans une installation de chauffage (2) à laquelle on met à disposition, en fonction d'une grandeur pilote externe ($\vartheta_A$), une puissance thermique ($\dot{Q}_{TH}$) prescrite, la puissance thermique prescrite ($\dot{Q}_{TH}$) dépendant additionnellement du besoin en chaleur (DQ) de l'installation de chauffage (2) en ce que, avec la dépendance de la grandeur pilote externe ($\vartheta_A$), des valeurs de correction (DXS) sont prises en compte, lesquelles sont déterminées en fonction de la grandeur pilote externe ($\vartheta_A$) à partir d'une courbe de correction tenant compte d'un besoin en chaleur moyen de l'installation de chauffage (2), laquelle est une courbe de correction non stationnaire, adaptive, adaptée en fonction de périodes de temps prescrites, **caractérisé en ce que** l'adaptation de la courbe de correction s'effectue **en ce que**, pendant une période de temps prescrite, le besoin en chaleur actuel (DQ) de l'installation de chauffage est utilisé en tant que grandeur réglée ($\Delta_{DQ}$) d'un réglage qui fait sortir, en guise de grandeur de correction, une valeur de correction actuelle ($DXS_{AKT}$), l'adaptation de la courbe de correction s'effectuant par calcul de la moyenne des valeurs de correction actuelles ($DXS_{AKT}$) pendant la période de temps prescrite.

**2.** Procédé selon la revendication 1, **caractérisé en ce que**, pour l'adaptation de la courbe de correction, il y a un calcul de la moyenne de la grandeur pilote externe ($\vartheta_A$).

**3.** Procédé selon l'une des revendications 1 ou 2, **caractérisé en ce qu'**il y a une adaptation pondérée avec la grandeur pilote externe ($\vartheta_A$) de la courbe de correction.

**4.** Procédé selon l'une des revendications précédentes, **caractérisé en ce que** l'adaptation de la courbe de correction est limitée à une plage de valeurs prescrite.

**5.** Procédé selon l'une des revendications précédentes, **caractérisé en ce que** l'on prévoit plusieurs courbes de correction pour différentes périodes de temps.

**6.** Procédé selon l'une des revendications précédentes, **caractérisé en ce que** la courbe de correction est prescrite en prescrivant des valeurs de correction ($DXS_{Node}(i)$) à des points de référence (i) pour des valeurs de la grandeur pilote externe($\vartheta_A(i)$).

**7.** Procédé selon la revendication 6, **caractérisé en ce que**, pour des valeurs de la grandeur pilote externe ($\vartheta_A(i)$) ne se situant pas à des points de référence(i), on effectue une interpolation ou une extrapolation des valeurs de correction.

**8.** Procédé selon les revendications précédentes, **caractérisé en ce que** la grandeur pilote externe est la température extérieure ($\vartheta_A$) ou une grandeur de mesure dépendant de la température extérieure.

**9.** Procédé selon l'une des revendications précédentes, **caractérisé en ce que** la valeur de correction (DXS) est une variation de la température aller ($\vartheta_{HVL}$) et/ou du débit massique ($\dot{m}$) de l'installation de chauffage.

**10.** Dispositif pour la mise à disposition de chaleur en fonction des besoins dans une installation de chauffage (2) avec un circuit logique (5) pour la prescription de valeurs de correction (DXS), lesquelles tiennent compte du besoin en chaleur (DQ) de l'installation de chauffage (2), le circuit logique (5) présentant un module d'adaptation de courbe de correction (10) avec une mémoire pour la mise en mémoire d'une ou plusieurs courbe(s) de correction, une entrée pour entrer au moins une grandeur pilote externe ($\vartheta_A$) et une sortie pour faire sortir une valeur de correction (DXS), un module de correction (11) avec une entrée pour l'entrée d'un besoin en chaleur actuel ($\Delta_{DQ}$) de l'installation de chauffage (2) étant prévu, lequel est étudié pour la détermination d'une valeur de correction actuelle ($IDXS_{AKT}$) à partir du besoin en chaleur actuel ($\Delta_{DQ}$), et le module d'adaptation de courbe de correction (10) étant étudié pour la détermination de la valeur de correction (DXS) à partir d'une courbe de correction en fonction de la grandeur pilote externe ($\vartheta_A$) ainsi que pour l'adaptation de la courbe de correction, **caractérisé en ce que** le module de correction (11) présente un réglage pour la détermination des valeurs de correction actuelles ($DXS_{AKT}$) à partir du besoin en chaleur actuel ($\Delta_{DQ}$) de l'installation de chauffage (2) et **en ce que** le dispositif est étudié pour exécuter le procédé selon l'une des revendications 1 à 9.

**11.** Dispositif selon la revendication 10, **caractérisé en ce que** le module d'adaptation de courbe de correction (10) est étudié pour calculer la moyenne de la grandeur pilote ($\vartheta_A$) et de la valeur de correction actuelle ($DXS_{AKT}$) sur une période de temps prescrite.

**12.** Dispositif selon l'une des revendications 10 ou 11, **caractérisé en ce que** le circuit logique (5) et/ou le dispositif de réglage de la puissance thermique (7) sont intégrés dans un réglage de chaudière.

**Fig. 1**

**Fig. 2**

**Fig. 3**

**Fig. 4**

**Fig. 5**

**Fig. 6**

**EP 1 837 729 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03052536 A2
- DE 3537104 A1

- DE 102004049112 A1